# EUROPÄISCHE PATENTSCHRIFT

(11) **EP 1 512 648 B1**
(45) Veröffentlichungstag und Bekanntmachung des Hinweises auf die Patenterteilung: **12.09.2007**
(21) Anmeldenummer: 04017780.0
(22) Anmeldetag: 27.07.2004
(51) Int. Cl.: B65G 47/53

(54) **Vorrichtung zur Übergabe von Stückgut**
Articles transferring device
Dispositif de transfert d'articles

(30) Priorität: 05.09.2003 DE 10341109
(43) Veröffentlichungstag der Anmeldung: 09.03.2005
(73) Patentinhaber: SIEMENS AKTIENGESELLSCHAFT, 80333 München (DE)
(72) Erfinder: Arnold, Thomas, 70806 Kornwestheim (DE); Schmidt, Heinz, 70567 Stuttgart (DE)

(56) Entgegenhaltungen:
- DE-A1- 3 012 355
- DE-A1- 4 236 362
- DE-A1- 19 603 554
- DE-C1- 4 439 106
- DE-C2- 19 818 604

## Beschreibung

Die Erfindung betrifft eine Vorrichtung zur Übergabe von Stückgut, insbesondere von Werkstückträgern, Werkstücken, Behältern oder Paletten, von einer ersten, aus zwei parallel und mit Abstand zueinander verlaufenden sowie das Stückgut tragenden Förderern bestehenden Förderbahn auf eine angrenzende zweite Förderbahn, mit einer Hubvorrichtung, die mittels mehrerer vertikaler, in den Eckbereichen der Hubvorrichtung angeordneter Linearantriebe zwischen einer unter der Förderebene der ersten Förderbahn gelegenen Ruhestellung und einer über dieser Förderebene gelegene Übergabestellung heb- und senkbar ist.

Aus der deutschen Patentschrift DE 30 12 355 C2 ist eine Vorrichtung zum Umsetzen von Werkstücken bzw. Werkstückträgern von einer ersten Förderbahn auf eine dazu rechtwinklig angeordnete zweite Förderbahn bekannt. Die Umsetzvorrichtung besteht aus einem endlosem Umsetzband, das zwischen den beiden Förderern der ersten Förderbahn eine weitere Förderbahn bildet und über einen Antriebsmotor angetrieben wird, der mit der weiteren Förderbahn zu einer Baueinheit zusammengefasst ist. Diese Baueinheit ist über einen Verbindungsrahmen an dem Tragrahmen der ersten Förderstrecke aufgehängt. Für den Umsetzvorgang sind die auf der ersten Förderbahn geförderten Werkstückträger durch die Umsetzvorrichtung anhebbar und werden zur zweiten Förderbahn gefördert. Anschließend wird die Umsetzvorrichtung wieder abgesenkt. Die Hub-/Senkbewegung der Umsetzvorrichtung erfolgt im wesentlichen durch eine Kolben-/Zylindereinheit, wobei, um die Kolbenstange der Kolben-/Zylindereinheit von Querkräften zu entlasten, eine zusätzliche Führung gegenüber dem feststehenden Verbindungsrahmen der Umsetzvorrichtung über Führungsstangen vorgesehen ist. Die Verwendung der zusätzlichen Führungsstangen neben der Kolben-/Zylindereinheit führt zu einem konstruktiv aufwendigen Aufbau der Hubvorrichtung.

Aus der deutschen Patentschrift DE 198 18 604 C2 ist es bekannt, das Förderelement der Übergabevorrichtung in Hub- und Senkrichtung über vier jeweils in den Ecken eines gedachten Vierecks angeordnete Linearantriebe anzutreiben, die als pneumatische Kolben-/Zylindereinheiten ausgebildet sind und durch die Aufteilung der Hebekräfte entsprechend klein dimensioniert werden können. Um ein Einleiten von Querkräften in die Antriebsstangen der Linearantriebe zu vermeiden, sind diese jeweils zwischen dem Förderelement und dem Linearantrieb entkoppelt, so dass die Hubvorrichtung außerhalb der Übergabestellung, in der das Förderelement über die Förderebene der ersten Förderbahn angehoben ist, auch mit einem seitlichen Spiel heb- und senkbar ist. Hierdurch soll gewährleistet sein, dass beim Heben oder Senken ein Verklemmen der Hubvorrichtung in Folge einer nicht exakt synchronen Betätigung der Linearantriebe vermieden wird, z.B. wenn schwere Lasten außermittig auf einem Werkstückträger aufliegen. Die bekannte Hubvorrichtung ist zwar in den Endlagen, d.h. in der Übergabestellung des Förderelementes fixiert, doch während des Hub- und Senkvorganges ist sie nur in den Linearantrieben geführt, so dass es, insbesondere bei einseitigen größeren Lasten trotz der vorgesehenen Maßnahmen zu einem nicht synchronen Ausfahren der Linearantriebe kommen kann.

Die DE 198 18 604 C2 offenbart eine Vorrichtung zur Übergabe von Stückgut von einer ersten Förderbahn auf einer angrenzenden zweiten Förderbahn. Die Förderbahnen bestehen aus zwei parallel und mit Abstand zueinander verlaufenden sowie das Stückgut tragenden Förderern. Weiterhin weist die Vorrichtung eine Hubvorrichtung auf, die mittels mehrerer vertikaler, in den Eckbereichen der Hubvorrichtung angeordneter Linearantriebe zwischen einer unter der Förderebene der ersten Förderbahn gelegenen Ruhestellung und einer über dieser Förderebene gelegenen Übergabestellung heb- und senkbar ist.

Die vorliegende Erfindung hat sich deshalb die Aufgabe gestellt, die bekannte Vorrichtung zur Übergabe von Stückgut so zu verbessern, dass während des gesamten Hubvorganges eine stetige Synchronisation der Linearantriebe erfolgt, so dass ein Klemmen oder Verkanten der Hubvorrichtung sicher vermieden wird.

Zur Lösung der Aufgabe wird erfindungsgemäß vorgeschlagen, dass die Linearantriebe als Kugelgewindegetriebe mit Kugeln- , spindeln und Mutter ausgebildet sind und dass jede Kugelmutter mit einem achsparallelen Zahnrad gekoppelt ist und dass alle Zahnräder der Kugelmuttern zu deren Synchronisation mechanisch untereinander gekoppelt sind. Alle Linearantriebe sind im Gleichlauf antreibbar. Kugelgewindegetriebe sind Präzisionslinearantriebe, die nicht nur eine exakte Führung ermöglichen, sondern auch mit geringer Reibung hohe Kräfte, auch solche in Querrichtung, aufnehmen können. Durch Anordnung mehrerer Kugelgewindegetriebe und Antreiben der Linearantriebe im Gleichlauf kann bei einer gattungsgemäßen Vorrichtung sichergestellt werden, dass auch nicht zentrische hohe Kräfte sicher gehoben, gesenkt und übergeben werden können.

In einer Ausgestaltung der Erfindung ist es vorgesehen, dass die Kugelspindeln der Kugelgewindegetriebe jeweils linear beweglich, aber verdrehfest, in Kugelmuttern gelagert sind, die ihrerseits jeweils in Längsrichtung der Kugelspindeln fest, aber um die Längsachse der Kugelspindeln drehbar an der Hubeinheit gelagert sind. Durch Verdrehen der Kugelmuttern wird die Kugelspindel gezwungen, sich in ihrer Längsrichtung nach oben oder unten zu bewegen, je nachdem in welcher Drehrichtung die Mutter verdreht wird.

In einer günstigen Ausgestaltung der Erfindung ist vorgesehen, dass jede Kugelmutter mit einem achsparallelen Zahnrad gekoppelt ist und das alle Zahnräder der Kugelmuttern zu deren Synchronisation mechanisch untereinander gekoppelt sind. Durch diesen Vorschlag der Erfindung wird sichergestellt, dass beim Verdrehen einer der Kugelmuttern alle anderen Kugelmuttern im Gleichlauf gedreht werden, weil die mit den Kugelmuttern gekoppelten Zahnräder ihrerseits miteinander gekoppelt sind. Das Verdrehen der Kugelmuttern im Gleichlauf bewirkt folglich gleichzeitig eine Linearverschiebung aller Kugelspindeln, ebenfalls im Gleichlauf, so dass in Folge der Synchronisation die Hubeinheit parallel zu sich selbst funktionssicher und einfach gehoben und gesenkt werden kann.

Wenn nach einem weiteren günstigen Merkmal der Erfindung vorgesehen ist, dass alle Zahnräder der Kugelmuttern in einer gemeinsamen horizontalen Ebene angeordnet sind und von einem endlosen Zahnriemen oder einer Kette umschlungen werden, so wird ein Kuppelmechanismus geschaffen, mit dem die Synchronisation aller Zahnräder und damit aller Kugelmuttern auf einfache Weise verwirklicht werden kann.

In einer einfachen Ausführung ist jedes Zahnrad mit der jeweiligen Kugelmutter koaxial verbunden, d.h. das Zahnrad ist beispielsweise stirnseitig mit der Kugelmutter verschraubt. Die um die Zahnräder geschlungene Kette oder der Zahnriemen verteilt das Drehmoment von einer Kugelmutter auf die weiteren Kugelmuttern und stellt somit ein synchronisiertes Verdrehen aller Kugelmuttern sicher.

Die Kette oder der Zahnriemen können sowohl als einfaches Koppelglied wie auch als Antriebsglied verwendet werden. In einer einfachen Form sieht die Erfindung vor, die Linearbewegung der Kugelnspindeln durch Druckmittelzylinder zu erzeugen, die stirnseitig an die Kugelspindeln anlegbar sind. In einem solchen Fall bewirkt die jeweilige Kugelspindel bei ihrer Linearbewegung über die Gewindesteigung zwischen Kugelspindel und Kugelmutter ein Verdrehen des die Kugelspindel umgreifenden Zahnrades. Da das Zahnrad mit den Zahnrädern der anderen Kugelspindeln mechanisch gekoppelt ist, werden alle von den Druckmittelzylindern angetriebenen Kugelspindeln zwangsläufig synchronisiert.

Es ist aber auch, wie ein anderes Merkmal der Erfindung vorschlägt möglich, die Linearbewegung der Kugelspindeln über die Kugelmuttern einzuleiten, indem der die Zahnräder umschlingende Zahnriemen oder die Kette antreibbar ist. In diesem Fall wird, wie eine weitere Ausgestaltung der Erfindung vorschlägt, beispielsweise als Antrieb des Zahnriemens oder der Kette ein Elektromotor verwendet, wobei ein einziger Motor für alle Linearantriebe ausreicht. Das Antriebsmoment wird von dem Antriebsstirnrad des Elektromotors über den Zahnriemen oder die Kette auf die jeweiligen, mit der Kugelmutter gekoppelten Zahnräder übertragen, die ihrerseits, in Drehbewegung versetzt, eine Linearbewegung der Kugelspindeln verursachen.

Es ist schließlich auch denkbar, die Linearbewegung der Kugelspindeln durch die Kombination eines den Zahnriemen oder die Kette antreibenden Elektromotors mit die Kugelspindeln stirnseitig verschiebenden Druckmittelzylindern einzuleiten. Die Druckmittelzylinder können, wie beim Stand der Technik einfache und leichte Pneumatikzylinder sein, da das Problem der Synchronisation durch die erfindungsgemäße Verwendung der Kugelgewindegetriebe gelöst ist.

Ein Ausführungsbeispiel der Erfindung ist in der Zeichnung dargestellt und wird nachfolgend beschrieben. Es zeigen:
- Figur 1: eine Draufsicht auf eine Hubvorrichtung nach der Erfindung mit elektromotorischen Antrieb,
- Figur 2: einen Linearantrieb einer erfindungsgemäßen Hubvorrichtung in abgesenkter Stellung,
- Figur 3: einen Schnitt durch das Kugelgewindegetriebe,
- Figur 4: den Linearantrieb nach Figur 1 in angehobener Position und
- Figur 5: die Vorrichtung mit elektromotorischem Antrieb.

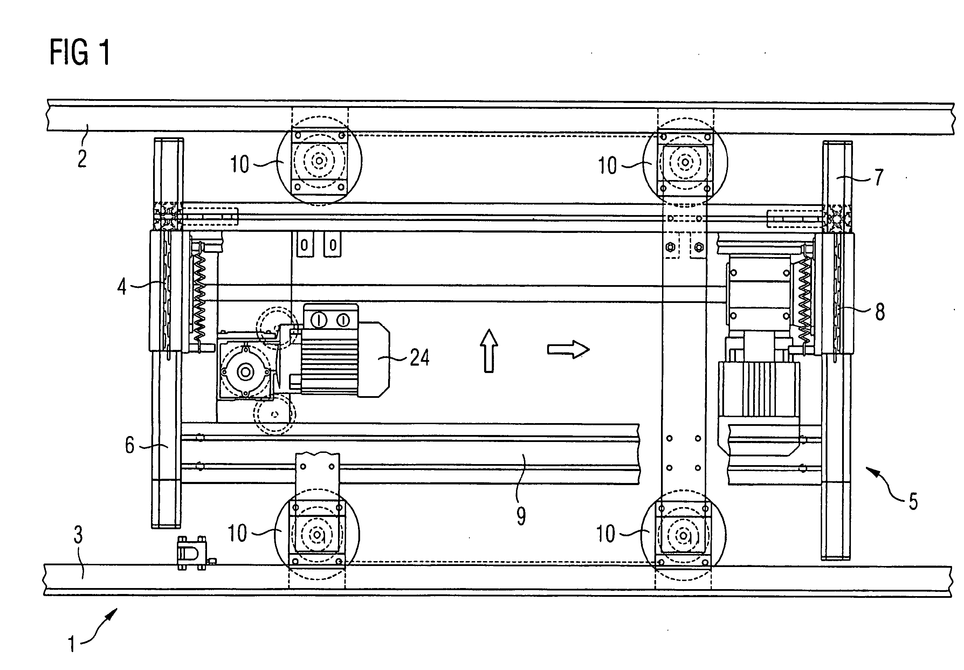

In Figur 1 ist eine Draufsicht auf eine Hubvorrichtung dargestellt, aus der die Position der erfindungsgemäßen Linearantriebe hervorgeht. In Figur 1 ist insgesamt mit 1 die erste Förderbahn bezeichnet, die aus den parallel zueinander verlaufenden Förderern 2 und 3 besteht, die jeweils mit Rollenketten 4 bestückt sind. Mit 5 ist die zweite Förderbahn bezeichnet, die ebenfalls aus zwei parallelen Fördererabschnitten 6 und 7 besteht, die ebenfalls mit Rollenketten 8 bestückt sind. Die zweite Förderbahn 5 ist mit einem Rahmen, der bei 9 angedeutet ist zu einer Hubvorrichtung zusammengefügt, die mit Hilfe der in den Eckbereichen der Hubvorrichtung 9 angeordneten Linearantriebe 10 (senkrecht zur Zeichnungsebene) heb- und senkbar ist.

Die Ausbildung eines derartigen Linearantriebes ist deutlicher in der Zeichnungsfigur 2 zu erkennen, die einen Querschnitt durch einen der vier identisch ausgebildeten Linearantriebe zeigt. In der Zeichnung ist im oberen Bereich ein Querträger 11 zu erkennen, an dem die (hier nicht dargestellten) Längsträger befestigt sind, die die Förderer 6 und 7 der zweiten Förderbahn 5 mit den Rollenketten 8 tragen. Rechts in der Zeichnung ist im Querschnitt die Rollenkette 4 der ersten Förderbahn zu erkennen, die in einem Aluminium-Strangpressprofil 12 endlos umlaufend geführt ist, wobei das Strangpressprofil 12, wie bei 13 dargestellt, seitlich abgedeckt ist.

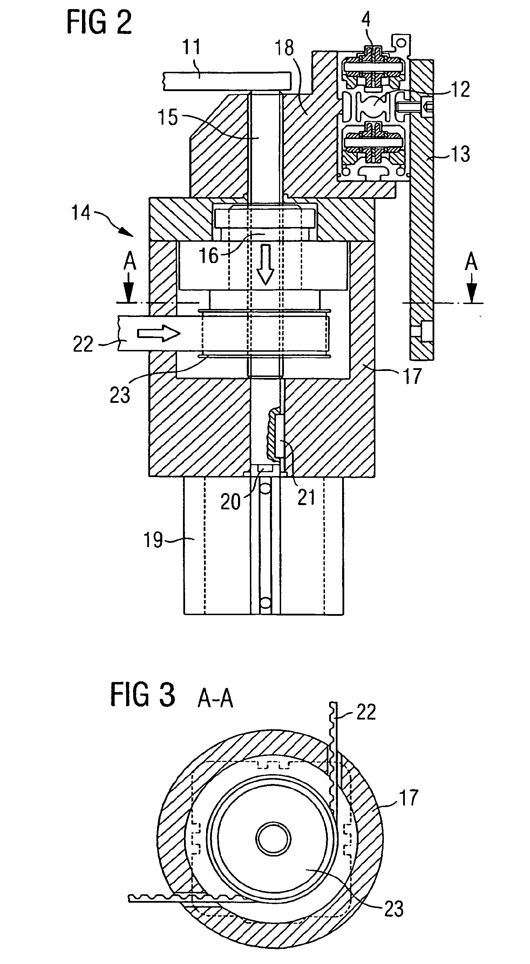

Der Linearantrieb besteht im Ausführungsbeispiel nach Figur 2 aus dem Kugelgewindegetriebe 14, das aus der Kugelspindel 15 und der Kugelmutter 16 besteht. Beide sind in dem Getriebegehäuse 17 angeordnet, das an dem Rahmenteil 18 angeschraubt ist. Am unteren Teil des Gehäuses 17 ist der als Pneumatikzylinder ausgeführte Druckmittelzylinder 19 angesetzt, dessen Kolbenstange 20 an der unteren Stirnseite der Kugelspindel 15 anliegt. Die Kugelmutter 16 ist drehbar, aber in Richtung ihrer Drehachse unverschiebbar, im Gehäuse 17 gelagert, während die Kugelspindel 15 innerhalb des Gewindes der Kugelmutter 16 bewegbar ist. Allerdings ist die Kugelspindel 15 über die Verdrehsicherung 21, einer Passfeder, im Gehäuse 17 gegen Verdrehung gesichert, so dass beim Verdrehen der Kugelmutter 16 der Kugelspindel eine Linearbewegung aufgezwungen wird. Diese Linearbewegung ist je nach Drehrichtung der Kugelmutter 16 nach oben oder unten gerichtet. Beim Aufwärtsbewegen der Kugelspindel 15 wird über den Querträger und den (nicht dargestellten) Längsträger die zweite Förderbahn 5 angehoben, die beim Bewegen der Kugelspindel 15 nach unten durch Drehrichtungsumkehr der Kugelmutter nach unten bewegt wird.

Es ist der wesentliche Kern der Erfindung, dass alle Kugelspindel 10 (Fig. 1) miteinander synchronisierbar sind, was, wie in Fig. 2 erkennbar, mittels eines endlosen Zahnriemens 22 erreicht wird, dessen Verzahnung der Verzahnung des Zahnriemens 22 entspricht, und der um das Zahnrad 23 geschlungen ist. Dieses Zahnrad ist mit der Kugelmutter 16 des Kugelgewindegetriebes 14 fest verbunden und dreht somit ebenfalls um die Längsachse der Kugelspindel 15. Der alle Zahnräder aller Linearantriebe umschlingende Zahnriemen 22 stellt sicher, dass sich alle Zahnräder 23 und damit alle Kugelmuttern 16 mit gleicher Drehgeschwindigkeit bewegen und somit die in den Kugelmuttern 16 gelagerten Kugelspindeln 15 synchron auf- und abbewegt werden.

Zum Antreiben der Kugelspindeln gibt es zwei Möglichkeiten, nämlich eine druckmittelbetriebene und eine elektrische. Im Ausführungsbeispiel nach Figur 2 ist ein Pneumatikzylinder 19 für den Antrieb der Kugelspindel 15 verantwortlich. Durch Ausfahren der Kolbenstange 20 beim Beaufschlagen des Pneumatikzylinders 19 mit Druckluft wird die Kugelspindel nach oben gedrückt. In Folge der reibungsarmen Lagerung im Kugelgewindegetriebes 14 wird durch die Linearbewegung der gegen Verdrehung gesicherten Kugelspindel 15, zwangsweise die Kugelmutter 16 in Drehung versetzt, so dass das Zahnrad 23, das mit der Kugelmutter verbunden ist, diese Drehbewegung zwangsläufig mit ausführen muss. Da das Zahnrad aber mit den benachbarten Zahnrädern der übrigen Kugelmuttern über den Zahnriemen 22 verbunden ist, sind alle Zahnräder 23 gezwungen, mit gleicher Drehgeschwindigkeit umzulaufen, mit dem Ergebnis, dass alle Kugelspindeln 15 aller Linearantriebe synchronisiert auf- und abbewegt werden.

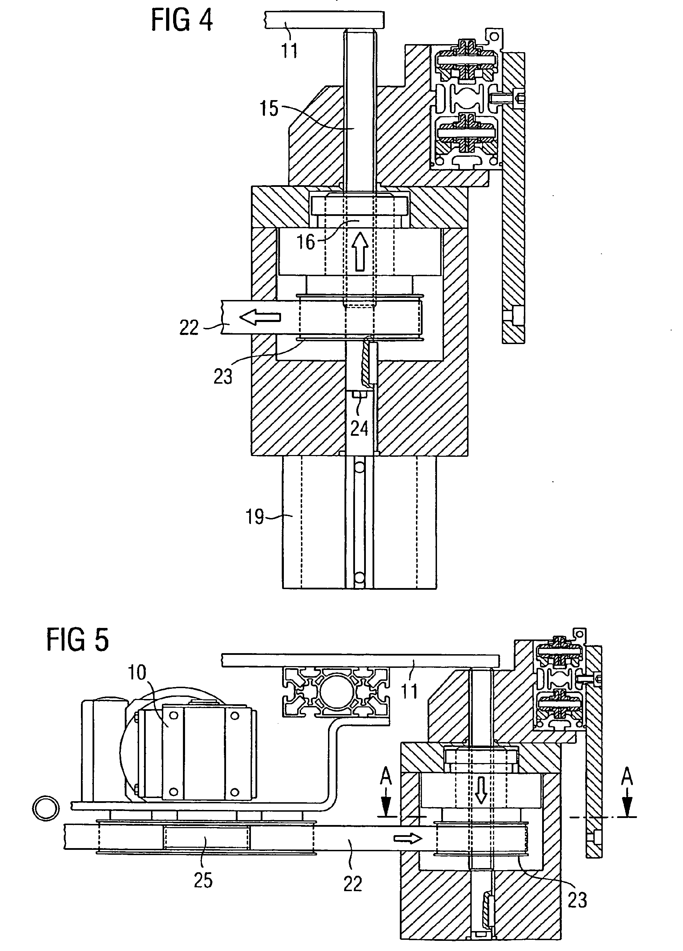

In Figur 4 ist die Kugelspindel 15 in ausgefahrener Stellung dargestellt, d.h. die Kolbenstange 20 des Pneumatikzylinders 19 ist in ihre Endstellung ausgefahren und drückt gegen die Stirnseite 24 der Kugelspindel 15. In dieser Stellung steht der Querträger 11 in seiner oberen Stellung, d.h. in der Übergabestellung eines Werkstückes oder Werkstückträgers von der zweiten Förderbahn auf die erste Förderbahn.

In Figur 5 ist die zweite Antriebsvariante dargestellt, bei der der Zahnriemen 22 durch den Elektromotor 10 über ein Stirnrad 25 unmittelbar angetrieben wird, wodurch die Zahnräder 23 angetrieben werden. Durch die Drehbewegung der Zahnräder werden die mit diesen verbundenen Kugelmuttern 16 in Drehung versetzt, die die Kugelspindeln 15 zwingt, sich innerhalb der Kugelmuttern 16 linear auf und ab zu bewegen, je nachdem in welcher Richtung die Kugelmuttern 16 über die Zahnräder 23 angetrieben werden. Auch hier erfolgt in Folge des alle Zahnräder 23 umschlingenden Zahnriemenantriebes eine Synchronisation aller vier Linearantriebe ohne zusätzliche Synchronisationshilfsmittel. Die Synchronisation verhindert ein Kippen oder Schrägstellen der Werkstücke oder Werkstückträger auf der zweiten Förderbahn, so dass gegebenenfalls die im Stand der Technik bekannte Endkopplung und Winkelbeweglichkeit der Hubstangen entfallen kann.

Es ist auch möglich, den Antrieb über den Elektromotor 24 mit dem Antrieb über den Pneumatikzylinder 19 zu kombinieren; auch hier werden die Vorteile der vorliegenden Erfindung erreicht, die insbesondere in den synchronen und einfachen Bewegungsabläufen der Linearantriebe zu sehen sind, wodurch auch große Werkstückgewichte gehoben und gesenkt werden können.

## Patentansprüche

1. Vorrichtung zur Übergabe von Stückgut, insbesondere von Werkstückträgern, Werkstücken, Behältern oder Paletten, von einer ersten, aus zwei parallel und mit Abstand zueinander verlaufenden sowie das Stückgut tragenden Förderern (2, 3) bestehenden Förderbahn (1) auf eine angrenzende zweite Förderbahn, mit einer Hubvorrichtung (9), die mittels mehrerer vertikaler, in den Eckbereichen der Hubvorrichtung angeordneter Linearantriebe (14) zwischen einer unter der Förderebene der ersten Förderbahn (1) gelegenen Ruhestellung und einer über dieser Förderebene gelegenen Übergabestellung heb- und senkbar ist, **dadurch gekennzeichnet, dass** die Linearantriebe als Kugelgewindegetriebe (14) mit Kugelspindel (15) und Kugelmutter (16) ausgebildet sind und dass jede Kugelmutter (16) mit einem achsparallelen Zahnrad (23) gekoppelt ist und dass alle Zahnräder (23) der Kugelmuttern (16) zu deren Synchronisation mechanisch untereinander gekoppelt sind.

2. Vorrichtung zur Übergabe von Stückgut nach Anspruch 1, **dadurch gekennzeichnet, dass** die Kugelspindeln (10) der Kugelgewindegetriebe (14) jeweils linearbeweglich, aber verdrehfest in den Kugelmuttern (16) gelagert sind, die ihrerseits jeweils in Längsrichtung der Kugelspindel (15) fest, aber um die Längsachse der Kugelspindeln (15) drehbar an der Hubvorrichtung gelagert sind.

3. Vorrichtung nach Anspruch 1 oder 2, **dadurch gekennzeichnet, dass** alle Zahnräder (23) der Kugelmuttern (16) in einer gemeinsamen horizontalen Ebene angeordnet sind und von einem endlosen Zahnriemen (22) oder einer Kette umschlungen werden.

4. Vorrichtung nach einem der vorangehenden Anspruche, **dadurch gekennzeichnet, dass** jedes Zahnrad (23) mit der jeweiligen Kugelmutter (16) koaxial verbunden ist und die Kugelspindel (16) umgreift.

5. Vorrichtung nach einem der vorangehenden Ansprüche, **dadurch gekennzeichnet, dass** die Linearbewegung der Kugelspindeln (15) durch Druckmittelzylinder (19) erzeugbar ist, die stirnseitig an die Kugelspindeln anlegbar sind.

6. Vorrichtung nach einem der vorangehenden Ansprüche, **dadurch gekennzeichnet, dass** die Linearbewegung der Kugelspindeln (15) über die Kugelmuttern einleitbar ist, indem der die Zahnräder umschlingende Zahnriemen (22) oder die Kette antreibbar sind.

7. Vorrichtung nach einem der vorangehenden Ansprüche, **dadurch gekennzeichnet, dass** als Antrieb des Zahnriemens (22) oder der Kette ein Elektromotor (24) vorgesehen ist.

8. Vorrichtung nach einem der vorangehenden Ansprüche, **dadurch gekennzeichnet, dass** die Linearbewegung der Kugelspindeln (15) durch die Kombination eines den Zahnriemen (22) oder die Kette antreibenden Elektromotor (24) mit die Kugelspindeln (15) stirnseitig verschiebenden Pneumatikzylinderantriebes (19) einleitbar ist.

## Claims

1. Device for transferring piece goods, in particular workpiece holders, workpieces, containers or pallets, from a first conveyor track (1) consisting of two conveyors (2, 3) running parallel to and at a distance from each other and conveying the piece goods to an adjacent second conveyor track, said transfer device comprising a lifting device (9) which can be raised and lowered by means of a plurality of vertical linear drives (14) arranged in the corner areas of the lifting device between an idle position located under the conveying plane of the first conveyor track (1) and a transfer position located above said conveying plane, **characterised in that** the linear drives are embodied as ball-and-screw spindle gears (14) having ball spindle (15) and ball nut (16) and that each ball nut (16) is coupled to an axially parallel gear wheel (23) and that all the gear wheels (23) of the ball nuts (16) are mechanically coupled to one another for the purpose of their synchronisation.

2. Device for transferring piece goods according to claim 1, **characterised in that** the ball spindles (15) of the ball-and-screw spindle gear (14) are in each case mounted in the ball nuts (16) in a linearly movable but torsionally rigid manner, which ball nuts (16) for their part are in each case mounted on the lifting device firmly in the longitudinal direction of the ball spindle (15), yet can rotate about the longitudinal axis of the ball spindles (15).

3. Device according to claim 1 or 2, **characterised in that** all the gear wheels (23) of the ball nuts (16) are arranged in a common horizontal plane and are encircled by an endless toothed belt (22) or a chain.

4. Device according to one of the preceding claims, **characterised in that** each gear wheel (23) is coaxially connected to the respective ball nut (16) and encompasses the ball spindle (15).

5. Device according to one of the preceding claims, **characterised in that** the linear movement of the ball spindles (15) can be generated by means of pressurising medium cylinders (19) which can be applied to the front face of the ball spindles.

6. Device according to one of the preceding claims, **characterised in that** the linear movement of the ball spindles (15) can be initiated via the ball nuts **in that** the toothed belt (22) or chain wound around the gear wheels can be driven.

7. Device according to one of the preceding claims, **characterised in that** an electric motor (24) is provided as the drive of the toothed belt (22) or chain.

8. Device according to one of the preceding claims, **characterised in that** the linear movement of the ball spindles (15) can be initiated by the combination of an electric motor (24) driving the toothed belt (22) or chain with a pneumatic cylinder drive (19) displacing the ball spindles (15) on the front face.

## Revendications

1. Dispositif de transfert d'articles, notamment de supports de pièces, de pièces, de récipients ou de palettes d'une première piste (1) convoyeuse constituée de deux convoyeurs (2, 3) s'étendant à distance parallèlement l'un à l'autre et portant l'article à une deuxième piste convoyeuse voisine qui comprend un dispositif (9) de levage et qui, au moyen de plusieurs entraînements (14) linéaires verticaux et disposés entre les parties de coin du dispositif de levage, peut être soulevée et abaissée entre une position de repos se trouvant sous le plan de convoyage de la première piste (1) de convoyage et une position de transfert se trouvant au-dessus de ce plan de convoyage, **caractérisé en ce que** les entraînements linéaires sont constitués sous la forme d'une transmission (14) à vis à bille ayant une broche (15) à bille et un écrou (16) à bille et **en ce que** chaque écrou (16) à bille est couplé à une roue (23) dentée parallèle à l'axe et **en ce que** toutes les roues (23) dentées des écrous (16) à bille sont couplées mécaniquement entre elles pour leur synchronisation.

2. Dispositif de transfert d'articles suivant la revendication 1, **caractérisé en ce que** les broches (10) à bille des transmissions (14) à vis à bille sont montées respectivement mobiles linéairement, mais sans possibilité de tourner dans les écrous (16) à bille qui, pour leur part, sont montés sur le dispositif de levage en étant solidaires dans la direction longitudinale de la broche (15) à bille, mais en pouvant tourner autour de l'axe longitudinal des broches (15) à bille.

3. Dispositif suivant la revendication 1 ou 2, **caractérisé en ce que** toutes les roues (23) dentées des écrous (16) à bille sont disposées dans un plan horizontal commun et sont entourées d'une courroie (22) dentée ou d'une chaîne sans fin.

4. Dispositif suivant l'une des revendications précédentes, **caractérisé en ce que** chaque roue (23) dentée est reliée coaxialement à l'écrou (16) à bille respectif et entoure la broche (15) à bille.

5. Dispositif suivant l'une des revendications précédentes, **caractérisé en ce que** le mouvement linéaire des broches (15) à bille peut être obtenu par des vérins (19) à fluide comprimé, qui peuvent être appliqués du côté frontal aux broches à bille.

6. Dispositif suivant l'une des revendications précédentes, **caractérisé en ce que** le mouvement linéaire des broches (15) à bille peut être amorcé par les écrous à bille par le fait que la courroie (22) dentée ou la chaîne qui entoure les roues dentées peut être entraînée.

7. Dispositif suivant l'une des revendications précédentes, **caractérisé en ce qu'**il est prévu un moteur (24) électrique comme entraînement de la courroie (22) dentée ou de la chaîne.

8. Dispositif suivant l'une des revendications précédentes, **caractérisé en ce que** le mouvement linéaire des broches (15) à bille peut être amorcé par la combinaison d'un moteur (24) électrique entraînant la courroie (22) dentée ou la chaîne et d'un entraînement (19) par vérin pneumatique, se coulissant du côté frontal avec les broches (15) à bille.
